# EUROPEAN PATENT SPECIFICATION

(11) **EP 2 312 410 B1**
(45) Date of publication and mention of the grant of the patent: **24.10.2012**
(21) Application number: 10013343.8
(22) Date of filing: 06.10.2010
(51) Int. Cl.: G05B 23/02

(54) **Method of contactless monitoring of turbines, particularly the individual blades of a steam or gas turbine in an electric generating station, and a system for carrying out that method**
Verfahren zur kontaktfreien Überwachung von Turbinen, insbesondere der einzelnen Schaufeln einer Dampf- oder Gasturbine in einem Elektrizitätswerk und System zur Durchführung dieses Verfahrens
Procédé de surveillance sans contact de turbines, particulièrement les pales individuelles d'une turbine à vapeur ou à gaz dans une station de génération d'électricité et système permettant d'effectuer ce procédé

(30) Priority: 15.10.2009 CZ 20090677
(43) Date of publication of application: 20.04.2011
(73) Proprietor: Starman, Stanislav, 14000 Praha 4 (CZ)
(72) Inventor: Starman, Stanislav, 14000 Praha 4 (CZ)
(74) Representative: Reichel, Pavel

(56) References cited:
- EP-A1- 2 073 022
- BEAUSEROY ET AL: "Nonintrusive turbomachine blade vibration measurement system", MECHANICAL SYSTEMS AND SIGNAL PROCESSING, LONDON, GB, vol. 21, no. 4, 7 February 2007 (2007-02-07), pages 1717-1738, XP005874467, ISSN: 0888-3270, DOI: DOI:10.1016/J.YMSSP.2006.07.015

## Description

### Field of the invention

The invention involves a method of contactless monitoring of turbines, particularly the individual blades of a steam or gas turbine in an electric generating station, and the arrangement of a system for carrying out that method.

### Description of the prior art

The turbine blades in electric generating stations are presently checked during shut-down of the turbine of the turbo-generator by non-destructive diagnostic methods. Operational diagnosis is not performed, however the control of the blades for operation of the turbine can detect their deflection or loosening. By monitoring the statistical deviation in the position of the blades it is possible to identify any possible fissures and to check their vibration, before the turbine is damaged, by monitoring the frequency of the blade oscillations and their deviations. When the turbine is started up, contact methods are used for monitoring, scanners such as tensiometers are fixed on the rotor or turbine blades. Such an apparatus transmits signals contactlessly from the rotor, but it uses contact sensors which are positioned under exacting physical circumstances of heat, humidity and acceleration. If, for instance, the vibration of each blade had to be monitored, up to 90 sensors would be needed. The lifespan of such sensors is from days to months and as they cannot be repaired, it would mean shutting down the turbine. A disadvantage is the impossibility of measuring the dynamic monitoring of the turbine during warm-up revolutions, for example at a speed of 1600 rev/min., which is quite unfavourable from the point of view of the vibration of the turbine blades. Nor is it possible, given the present system of measuring the vibrations and shifts of a turbo-generator, to identify the blade oscillations. Information concerning the dynamic behaviour of a turbo-generator, required for competent decision-making to assure safe and long-term operation, is therefore lacking.

BEAUSEROY ET AL: "Nonintrusive turbomachine blade vibration measurement system",MECHANICAL SYSTEMS AND SIGNAL PROCESSING, LONDON, GB, vol. 21, no. 4, 7 February 2007 (2007-02-07), pages 1717-1738, XP005874467,ISSN: 0888-3270, DOI: DOI:10.1016/J.YMSSP.2006.07.015 describes a system for monitoring blade vibration.

### Summary of the invention

The invention relates to a method of contactless monitoring of turbines, particularly the static and dynamic parameters of the individual blades of a steam or gas turbine in an electric generating station, where the turbine comprises one or more blade wheels attached to a common shaft. During operation of the turbine the positions of the individual revolving blades are scanned as they pass close to at least one sensor situated in the static part of the turbine outside the blade wheel around its circumference and to at least one sensor of reference marks on the turbine's revolving shaft, and also the time of their passage in the area of the corresponding sensor is recorded. The scanned data are digitized, after which they are processed and stored in binary form as files bearing time information with a resolution of 10 ns, information on the place of origin of the time event and on the shape of the blade impulse. From a selected number of revolutions of the turbine, a block of continuous data is processed and a statistical analysis is carried out, where the time data generated by the passage of the blades around the individual sensors are transformed into standardized vectors describing the sequence of passages of a given blade around the consecutive sensors and, by means of the reference marks on the turbine shaft, the time difference is calculated with respect to the nearest reference mark, whereby irregularities in the rotation of the turbine shaft are eliminated. The ascertained values are standardized according to the actual revolutions and the circumference of the turbine, time shifts caused by the different shape of the blade impulses are corrected and the time variances of the individual blades are converted into instantaneous deviations from the mean position and analyzed.

The subject of the invention is also the arrangement of a system for carrying out the above described method, comprising one or more blade wheels attached to a common shaft of a steam or gas turbine in an electric generating station, where in the static part of the turbine outside the blade wheel around its circumference, at least one sensor of the position of the rotating blade is arranged close to the turbine blades and an additional sensor of reference marks on the turbine's revolving shaft for identifying the specific blades and the synchronization of the blade, is situated on the turbine shaft, said sensors being connected by their outlets to an evaluation unit for processing and storing signals from the sensors concerning the position and time of passage of the relevant rotating blade and its deviations and for identifying deflection of the blades, their stress, vibration and the spectrum of the swings during vibrations. The evaluation unit comprises a first section for digitizing the scanned data and their processing and storing in binary form as files bearing time information with a resolution of 10 ns on the place of origin of the time event and on the shape of the blade impulse, a second section for carrying out a statistical analysis of the processed block of continuous data from a selected number of revolutions of the turbine, a third section for transforming the time data generated by the passage of the blades around the individual sensors into standardized vectors describing the sequence of passages of a given blade around the consecutive sensors, and a fourth section for calculating the time difference of these passages with respect to nearest reference mark on the turbine's shaft and eliminating irregularities in the rotation of the turbine shaft and standardizing the ascertained values according to the actual revolutions and the circumference of the turbine, and for correcting time shifts caused by the different shape of the blade impulses and converting the time variances of the individual blades into instantaneous deviations from the mean position and analyzing them.

The exact positions of the passage of the blades are thus read by means of the sensors. The positions are evaluated by one or more analogue comparators, or digitally after sampling by an analogue digital converter, when it is possible to partially differentiate according to the amplitude of the shorter and longer blades and to specify their time positions. From the information about the position and time of passage of the blades and the monitoring of their deviations, the deflection of the blades, their stress, vibration and the spectrum of the swings during vibrations are identified.

In order to read the degree of twisting of the shaft, its stress or the momentary output of the turbine, the system is arranged on at least two blade wheels or sections of the turbine.

The sensors are selected from the group comprising a simple or differential coil, a scanning induction coil or coils working in a static magnetic field or dynamic field actuated by an auxiliary coil or set of auxiliary coils, on the principle of a magneto-resistor and the Hall effect, and laser sensors or optical sensors working on the principle of reflection of a beam from a blade. The turbine blades are magnetized or the sensors are provided with an auxiliary magnetic field created by a permanent magnet, electromagnet or a combination of the two.

The system permits dynamic monitoring of the positions of the blades on the turbine shaft by means of an assessment of the amplitude and time differentials, an assessment of the trend of deviations of the blades in time and according to weight, and further an assessment of the vibration of the blades on the shaft, of the bending and torsional oscillations of the blades and the shaft, of the oscillations during the transitional external regimes, twisting and extension of the blades caused by centrifugal force, and setting of the amplitude and frequency of the individual blades. It permits long-term monitoring of the vibration of individual blades during start-up on synchronizing revolutions. From the deviations measured it is also possible to calculate the stress of the blades in selected positions provided the system is calibrated. It is possible to determine the least favourable regimes from the point of view of dynamic stress of the blades, and the limits for operation of the machine in those regimes can then be defined.

Long-term retrieval and storage of the measured data and the possibility of their subsequent assessment for various regimes of turbine operation is advantageous. Measurement expands the body of knowledge concerning the tuning of blades under actual operating conditions. Based on an evaluation of the data from permanent monitoring of the system, problematic areas for operation can be defined. From deviations with respect to the initial state, an operating regime involving increased stress on the blades and the possibility of incipient damage to the blades can be analyzed. Various precautions can be taken for a given phase on starting up the turbo-generator. Reduction of risk of a blade breaking off in the operation of the turbine can therefore be expected.

### Brief description of the drawings

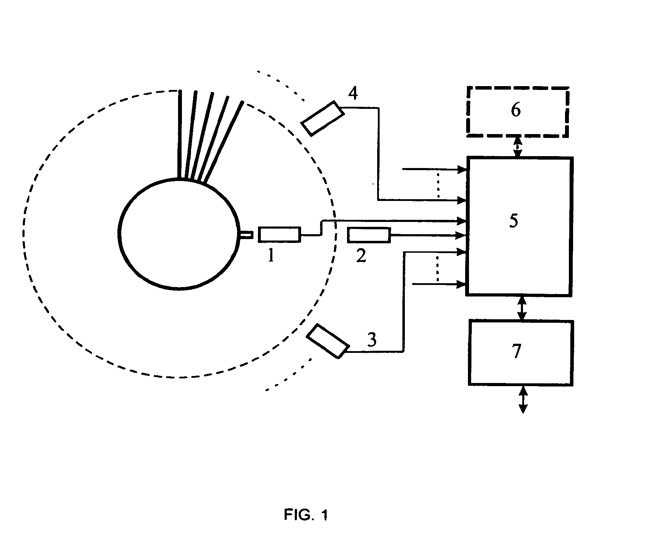

The invention will be further explained by means of the attached drawing and will be described in more detail in the text which follows. The drawing is a schematic representation of the basic arrangement of a system for contactless diagnosis of turbines, with three sensors of the passage of the turbine blades moving in their areas situated on the casing or in the static part of the turbine, and with one sensor situated on the turbine shaft and serving to identify specific blades and to synchronize the blades. Eight sensors in the static part of the turbine are schematically illustrated here.

### Examples of preferred embodiments

The system for contactless diagnosis of turbines consists of the turbine to be measured, sensors 2 to 4, an evaluation unit 5, and possibly a computer 6, modem 7, display etc. In order to check the dynamic parameters of the blades of the circulating wheels of steam turbines, use is made of diagnostics based on the principle of contactless monitoring of the passage of moving turbine blades during their revolutions, by means of one or more sensors 2, 3, 4 situated on the casing or in the static part of the turbine close to the blades, that is outside the turbine. The sensors can consist of a simple or differential coil, a scanning induction coil or coils working in a static magnetic field or dynamic field actuated by an auxiliary coil or set of auxiliary coils. They can monitor the difference in the magnetic field during passage of the turbine blades, on the principle of a magneto-resistor or the Hall effect. The system can be completed with at least one additional sensor 1 situated on the turbine shaft and serving to identify specific blades and to synchronize the blades.

Sensors 1 to 4 for measuring the positions of the blades work on one of the following principles:
- induction, where they consist of a simple or differential coil. During passage of a blade around the sensor, induced voltage occurs;
- induction, where they consist of at least two simple or differential coils. During passage of a blade around the sensor, induced voltage occurs in each of the coils, which are used independently in order to increase reliability; for auto-calibration of sensitivity, a testing signal, pulsing or continual, can be sent into at least one coil;
- the inductive active principle, where there is at least one coil (simple or differential) into which is led a continual or pulsing signal, and its amplitude or change of frequency under the influence of the passage of a blade is monitored, thus affecting the dispersive field of the sensor;
- scanning induction coils, where the set of coils is assembled so that the angular sensitivity of the sensor will be increased and the influence of the deviations suppressed by the distance of the blades from the sensor;
- a scanning induction coil(s) working in a static magnetic field or in a dynamic field actuated by an auxiliary coil or set of auxiliary coils to increase sensitivity;
- sensors which monitor the difference in the magnetic field during passage of the blades on the principle of a magneto-resistor or the Hall effect, working in a static or dynamic magnetic field. The sensors can also work with the residual magnetic field of the blades, or the blades can be magnetized for this purpose;
- laser sensors or optical sensors working on the principle of reflection of a beam from the blade.

Individual sensors 1 to 4 are connected to the evaluation unit 5, which comprises a first section for digitizing the scanned data and their processing and storing in binary form as files bearing time information with a resolution of 10 ns on the place of origin of the time event and on the shape of the blade impulse, a second section for carrying out a statistical analysis of the processed block of continuous data from a selected number of revolutions of the turbine, a third section for transforming the time data generated by the passage of the blades around the individual sensors into standardized vectors describing the sequence of passages of a given blade around the consecutive sensors, and a fourth section for calculating the time difference of these passages with respect to nearest reference mark on the turbine's shaft and eliminating irregularities in the rotation of the turbine shaft and standardizing the ascertained values according to the actual revolutions and the circumference of the turbine, and for correcting time shifts caused by the different shape of the blade impulses and converting the time variances of the individual blades into instantaneous deviations from the mean position and analyzing them.

The evaluation unit 5 comprises an external or internal preamplifier, at least one comparator (more comparators serve for several different levels of signal amplitude), a set of counters for measuring the time passages of the turbine blades and an imaging and archival unit which depicts, processes and archives the values read from the individual time intervals and further, according to specific requirements, transfers them by means of commercial technology such as a computer 6, modem 7, display etc. The sensors are best implemented by a logic array to minimize the number of components.

In another of the possible embodiments of this invention the comparator is replaced or complemented by an analogue digital converter, the signal from the sensor is sampled and digitally processed to provide specific readings of the instants when the blades pass around the sensor in question.

The comparators and actuators of the twisted pairs or optical lines can be moved, in order to suppress interference, towards the preamplifiers, and they can be moved as close as possible to the sensors 1 to 4. The analogue digital converters can also be moved directly to the preamplifiers and the logic circuit can evaluate the position of the passage of a blade either in the analogue digital converter or in the evaluation unit 5.

Synchronizing signs on the turbine shaft can be used to complement the system. The system can also be mounted on at least two of the blade wheels. That facilitates evaluation of the twisting of the turbine shaft when due to their high revolutions the shaft is so twisted that the individual blade wheels are slightly mutually skewed. In such a case the outputs of the individual sensors 2, 3, 4 of the position of the blades of each blade wheel, which revolve together with the shaft, are connected to the evaluation unit 5 that evaluates an angular shift of the individual blade wheels and twisting of the shaft.

The turbine blades are either magnetized or the sensors 1 to 4 are provided with an auxiliary magnetic field created by a permanent magnet, an electromagnet or a combination of the two. Actuation by an alternating electrical signal can be used for the auxiliary magnetic field.

During passage of a turbine blade in the area of sensors 2 to 4, the sensor gathers information on its position and time of passage, which is evaluated either by means of an analogue amplifier and comparator, or digitally by sampling and evaluating the shape of the pulses. From the information on the position and time of passage of the blades and monitoring their deviations, the deflection of the blades, their stress, vibration and the spectrum of oscillation during vibrations are identified.

Where this system is located on two or more sections of a turbine, it is also possible to take readings on the twisting of the shaft, its stress and the momentary output of the turbine. The orientation and identification of a specific blade can be ascertained by placing an additional sensor or sensors 1 on the turbine shaft using, for example, a hole, a projection or a mark on the shaft. More precise readings can be achieved by use of more marks in several sectors around the periphery of the shaft. The system can even send out a warning signal of dangerous conditions in the operation of the turbine.

Signals, which are generated by the sensors 1 to 4 during passage of the individual blades of the turbine and of the reference marks on the turbine shaft, are amplified, compared in the analogue way and digitized, then processed in the evaluation units 5 and stored in binary form as files bearing both time information with a resolution of 10 ns and information on the location (channel) where the time event occurred. In the control program it is possible to set all the functions of each channel, as for example the active edge of the signal (leading, descending or both), the period of insensitivity to the edges for suppressing faulty events, the measuring or testing regime and other functions. The control program of the evaluation unit 5 stores the data in files, either continually or in cycles with a set length for the block and period of the recording. The monitor shows on-line information about the frequency of occurrences on individual entries, which permits verification of the functions of all the sensors and of individual channels of the evaluation unit 5. The diagnostic and evaluation program for transformation and analysis of data always processes a continuous block of data from a sufficient number of rotations of the turbine, and carries out statistical processing of data. The optimal block length for processing appears to be 100 revolutions. The block contains a sufficient number of data for analysis and the events analyzed can be considered as instantaneous rather than averaged over a long time interval. Time events generated by the passage of blades around the individual sensors 2 and 4 are transformed into standardized vectors describing the sequence of passages of a given blade around the subsequent sensors. By means of eight reference marks on the turbine shaft, time differences with respect to the nearest reference marks are calculated, making it possible to eliminate irregularity in the rotation of the shaft. The values are standardized according to the actual revolutions and the circumference of the turbine and correction to the time shift caused by the different shape of the blade impulses is carried out. The time differences of individual blades are checked in mm on the instantaneous deviations from the average position. The data can be analyzed from one sensor, use of all eight sensors expands the frequency band from 25 to 200 Hz and also makes it possible to analyze even segments developed by the rotation of the turbine. The subsequent frequency analysis leads to a better separation of the components of the spectrum. The transformed data can be exported as ASCII vectors, for example in CSV format.

The transformed data can be analyzed sequentially, the required calculation (histogram and FFT) is always performed for an individual blade. The blades with the greatest statistical deviation are sought out in the cycle. For these blades (or for the operator-selected blade) a histogram in mm of the amplitude of the blades and the amplitude frequency of the FFT function is calculated and shown. On the basis of the preceding calibration, an estimate of the stress in the footing of a blade can be carried out during the oscillation of the blade in its inherent resonance frequency. The operators do not need to be involved in the operation of the programme. In the data file on the disc, data will be stored which define the established boundaries. These data can be edited by the operators. In the event that certain boundaries are exceeded, that information will be shown on the display and stored in a synoptic table on the disc, which can be selected by the operators.

Verification of the function of the software is as follows. During measuring, data concerning the frequency of events in individual entries is shown on the monitors of the evaluation units 5 and it is thus possible to check the accuracy of the function of the sensors and of the subsequent entry circuits. Each channel of the evaluation units 5 can be further switched by the software into a testing mode where, instead of a measured signal, a testing signal is generated. It is thus possible to examine the activity of the whole software chain (or even the hardware including the sensors). Checking the software for analysis of the data is carried out by means of a special data file (data simulator). Moreover, the histograms shown of the blade deflections provide an instantaneous overview not only of the deflections but also of the correct functioning of the system including the software.

### List of reference numerals

- 1 ...: additional sensor
- 2 ...: first sensor
- 3 ...: second sensor
- 4 ...: eighth sensor
- 5 ...: evaluation unit
- 6...: computer
- 7 ...: modem

## Claims

1. A method of contactless monitoring of turbines, particularly of the static and dynamic parameters of the individual blades of a steam or gas turbine in an electric generating station, where the turbine comprises one or more blade wheels attached to a common shaft, whereby during operation of the turbine the positions of the individual revolving blades are scanned as they pass close to at least one sensor (2, 3, 4) situated in the static part of the turbine outside the blade wheel around its circumference, and to at least one additional sensor (1) of reference marks on the turbine's revolving shaft, and also the time of their passage in the area of the corresponding sensor is recorded, **characterized in that** the scanned data are digitized, after which they are processed and stored in binary form as files bearing time information with a resolution of 10 ns, information on the place of origin of the time event and on the shape of the blade impulse, from a selected number of revolutions of the turbine, a block of continuous data is processed and a statistical analysis is carried out, where the time data generated by the passage of the blades around the individual sensors (2, 3, 4) are transformed into standardized vectors describing the sequence of passages of a given blade around the consecutive sensors and, by means of the reference marks on the turbine shaft, the time difference is calculated with respect to the nearest reference mark, whereby irregularities in the rotation of the turbine shaft are eliminated, the ascertained values are standardized according to the actual revolutions and the circumference of the turbine, time shifts caused by the different shape of the blade impulses are corrected and the time variances of the individual blades are converted into instantaneous deviations from the mean position and analyzed.

2. A system for carrying out the method according to claim 1, comprising one or more blade wheels attached to a common shaft of a steam or gas turbine in an electric generating station, where in the static part of the turbine outside the blade wheel around its circumference, at least one sensor (2, 3, 4) of the position of the rotating blade is arranged close to the turbine blades and an additional sensor (1) of reference marks on the turbine's revolving shaft for identifying the specific blades and the synchronization of the blade, is situated on the turbine shaft, said sensors being connected by their outlets to an evaluation unit (5) adapted to process and store signals from the sensors (1, 2, 3, 4) concerning the position and time of passage of the relevant rotating blade and its deviations and adapted to identify deflection of the blades, their stress, vibration and the spectrum of the swings during vibrations, **characterized in that** the evaluation unit (5) comprises a first section adapted to digitize the scanned data and their processing and storing in binary form as files bearing time information with a resolution of 10 ns on the place of origin of the time event and on the shape of the blade impulse, a second section adapted to carry out a statistical analysis of the processed block of continuous data from a selected number of revolutions of the turbine, a third section adapted to transform the time data generated by the passage of the blades around the individual sensors (2, 3, 4) into standardized vectors describing the sequence of passages of a given blade around the consecutive sensors, and a fourth section adapted to calculate the time difference of these passages with respect to nearest reference mark on the turbine's shaft and to eliminate irregularities in the rotation of the turbine shaft and adapted to standardize the ascertained values according to the actual revolutions and the circumference of the turbine, and further adapted to correct time shifts caused by the different shape of the blade impulses and to convert the time variances of the individual blades into instantaneous deviations from the mean position and to analyze them.

3. A system according to claim 2, **characterized in that**, in order to read the degree of twisting of the shaft, its stress or the momentary output of the turbine, the system is arranged on at least two blade wheels or sections of the turbine.

4. A system according to claim 2 or 3, **characterized in that** the sensors (1, 2, 3, 4) are selected from the group comprising a simple or differential coil, a scanning induction coil or coils working in a static magnetic field or dynamic field actuated by an auxiliary coil or a set of auxiliary coils, on the principle of a magneto-resistor and the Hall effect, and a laser sensor or optical sensor working on the principle of reflection of a beam from a blade.

5. A system according to any of claims 2 to 4, **characterized in that** the turbine blades are magnetized or the sensors (1, 2, 3, 4) are provided with an auxiliary magnetic field created by a permanent magnet, electromagnet or a combination of the two.

6. A system according to any of claims 2 to 5, **characterized in that** the evaluation unit (5) is attached to a computer (6) or to a modem (7) or display.

## Patentansprüche

1. Ein Verfahren zur kontaktlosen Überwachung von Turbinen, insbesondere zur Überwachung des statischen und dynamischen Parameters der einzelnen Blätter einer Dampfturbine oder einer Gasturbine in einer Station zur Erzeugung von elektrischem Strom, wobei die Turbine eine oder mehr Laufräder umfasst, die auf einer gemeinsamen Welle befestigt sind, wobei die Positionen der einzelnen sich drehenden Blätter während dem Betrieb der Turbine gescannt werden wenn sie nahe an mindestens einem Sensor (2, 3, 4) vorbei gehen, der sich in dem feststehenden Teil der Turbine ausserhalb des Laufrades um seinen Umfang herum befindet und in der Nähe von mindestens einem zusätzlichen Sensor (1) für die Bezugsmarken auf der sich drehenden Welle der Turbine, und es wird ebenfalls die Zeit des Vorbeigehens der Blätter in dem Bereich des entsprechenden Sensors aufgenommen, **dadurch gekennzeichnet, dass** die gescannten Daten digitalisiert werden, wonach sie dann verarbeitet werden und in binärer Form als Dateien gespeichert werden, welche die Zeitinformation mit einer Auflösung von 10 nSek. enthält, und wobei die genannten Dateien ebenfalls die Information über den Ort des Ursprungs des Zeitereignisses und über die Form des von dem Blatt ausgehenden Impulses enthält, au seiner gewählten Anzahl von Umdrehungen der Turbine wird ein Block von kontinuierlichen Daten verarbeitet und es wird dann eine statistische Analyse ausgerührt, wobei die Zeitdaten, die beim Durchgang der Blätter um die einzelnen Sensoren (2, 3, 4) erzeugt worden sind in standardisierte Vektoren umgeformt werden, die die Sequenz der Durchgänge eines gegebenen Blattes um die aufeinander folgenden Sensoren beschreiben und der Zeitunterschied wird mit Hilfe von Referenzmarken auf der Welle der Turbine im Bezug auf die nächste Referenzmarke berechnet, wobei Unregelmässigkeiten bei der Rotation der Welle der Turbine eliminiert werden, und die identifizierten Werte werden entsprechend den aktuellen Umdrehungen und dem Umfang der Turbine standardisiert, die Zeitverschiebungen, die durch die unterschiedliche Form der Impulse der Blätter hervorgerufen werden, werden korrigiert und die Zeitabweichungen der einzelnen Blätter werden in unmittelbaren Abweichungen von der mittleren Position umgewandelt und analysiert.

2. Ein System zum Ausführen des Verfahrens nach dem Patentanspruch 1, umfassend eine oder mehr Laufräder, die an einer gemeinsamen Welle einer Dampfturbine oder einer Gasturbine in einem Stromkraftwerk befestigt sind, wobei in dem statischen Teil der Turbine ausserhalb des Laufrades um ihren Umfang herum mindestens ein Sensor (2, 3, 4) von der Position des sich drehenden Blattes in der Nähe der Blätter der Turbine angeordnet ist und ein zusätzlicher Sensor (1) der Referenzmarken auf der sich drehenden Welle der Turbine zur Identifizierung der spezifischen Blätter und zu Synchronisierung des Blattes auf der Welle der Turbine gelegen ist, wobei die genannten Sensoren durch ihre Auslässe mit einer Auswertungseinheit (5) verbunden sind, welche Einheit dazu geeignet ist die Signale der Sensoren (1, 2, 3, 4) betreffend die Position und die Zeit des Durchgangs des relevanten sich drehenden Blattes und seine Abweichungen zu verarbeitern und zu speichern und welche Einheit auch dazu geeignet ist die Durchbiegung der Blätter, ihre Beanspruchung, ihre Schwingung und das Spektrum der Variationen während der Schwingungen zu identifizieren, **dadurch gekennzeichnet, dass** die Auswerteeinheit (5) einen ersten Abschnitt umfasst, der dazu geeignet ist die gescannten Daten zu digitalisieren und welche ebenfalls dazu gedacht ist die genannten Daten zu verarbeiten und sie dann in binärer Form als Dateien zu speichern, welche Daten dann die Zeitinformation mit einer Auflösung von 10 Nanosekunden am Platz des Ursprungs des Zeitereignisses trägt und welche Information ebenfalls die Form des Impulses des Blattes trägt, und **dadurch gekennzeichnet, dass** die Auswerteeinheit (5) einen zweiten Abschnitt umfasst, der dazu geeignet ist eine statistische Analyse des verarbeiteten Blockes der kontinuierlichen Daten von einer ausgewählten Anzahl von Umdrehungen der Turbine aufzuführen und **dadurch gekennzeichnet, dass** die genannte Einheit ebenfalls einen dritten Abschnitt umfasst, der dazu geeignet ist die Zeitdaten, die durch den Durchgang der Blätter um die Einzelnen Sensoren (2, 3, 4) in standardisierten Vektoren umzuformen, welche Vektoren die Sequenz der Durchgänge eines gegebenen Blattes um die aufeinander folgenden Sensoren beschreiben, und **dadurch gekennzeichnet, dass** die genannte Einheit einen vierten Abschnitt umfasst, der dazu geeignet ist die Zeitunterschied von diesen Durchgängen in Bezug auf die nächste Referenzmarke der Welle der Turbine zu berechnen und Unregelmässigkeiten bei der Rotation der Welle der Turbine zu eliminieren und welcher vierter Abschnitt dazu geeignet ist, die identifizierten Werte entsprechend den aktuellen Umdrehungen und dem Umfang der Turbine zu standardisieren und welcher vierter Abschnitt ausserdem dazu geeignet ist Zeitabschnitte zu korrigieren, die durch die unterschiedliche Form der Impulse der Blätter hervorgerufen werden und die zeitlichen Änderungen der einzelnen Blätter in unmittelbaren Abweichungen von der mittleren Position umzuwandeln und sie dann zu analysieren.

3. Ein System nach Patentanspruch 2 **dadurch gekennzeichnet, dass** die Beanspruchungen der genannten Welle mit dem Ziel den Grad des Verdrilles dieser Welle zu lesen oder um den momentaren Ausgang der Turbine zu lesen wird das System auf mindestens zwei Laufrädern oder Abschnitten der Turbine angeordnet.

4. Ein System nach dem Patentanspruch 2 oder 3, **dadurch gekennzeichnet, dass** die Sensoren (1, 2, 3, 4) aus der Gruppe ausgewählt werden, die eine einfache oder unterschiedliche Spule, eine Induzierungsspule zum Scannen oder Spulen, die in einem statischen magnetischen Feld oder einem dynamischen Feld arbeiten umfassen, betätigt durch eine Hilfsspule oder einen Satz von Hilfsspulen auf dem Prinzip eines Magnetwiderstand und auf dem Prinzip des Halleffekts, und wobei diese genannte Gruppe ebenfalls einen Lasersensor oder einen optischen Sensor umfasst, welche auf dem Prinzip der Reflektion eines Strahls von einem Blatt arbeiten.

5. Ein System nach irgendeinem der Patentansprüche 2 bis 4, **dadurch gekennzeichnet, dass** die Turbinenblätter magnetisiert sind oder dass Sensoren (1, 2, 3, 4) mit einem zusätzlichen magnetischen Feld zur Verfügung gestellt warden, welches Feld durch einen permanenten Magneten, einen Elektromagneten oder eine Kombination zwischen einem permanenten Magneten und einem Elektromagneten erzeugt wird.

6. Ein System nach irgendeinem der Patentansprüche 2 bis 5, **dadurch gekennzeichnet, dass** die Auswerteeinheit (5) an einem Computer (6) oder an einem Modem (7) oder an einer Anzeigeeinheit befestigt ist.

## Revendications

1. Un procédé pour la surveillance sans contacte de turbines, en particulier la surveillance des paramètres statiques et dynamiques des pales individuelles de turbine à vapeur ou d'une turbine à gaz dans une centrale électrique, où la turbine comprend une ou plusieurs roues à pales fixées à un arbre commun, où pendant le fonctionnement de la turbine les positions de chaque pale qui tourne sont scannées lorsqu'elles passent près d'au moins un capteur (2, 3, 4) situé dans la partie fixe de la turbine à l'extérieur de la roue à pales autour de sa circonférence et près d'au moins un capteur (1) supplémentaire de marques de référence sur l'arbre qui tourne de la turbine et l'heure de leur passage dans la zone du capteur correspondant est également enregistrée,**caractérisé en ce que**
les données scannées sont numérisées, puis traitées et stockées sous une forme binaire en tant que fichiers comportant des informations sur le temps avec une résolution de 10 ns, des informations sur le lieu d'origine de l'événement temporel et sur la forme des impulsions générées par la pale à partir d'un certain nombre de tours de la turbine, **en ce qu'**un bloc de données continues est traité et **en ce qu'**on réalise une analyse statistique dans laquelle les données temporelles générées par le passage des pales autour de chaque capteur (2, 3, 4) sont transformées en vecteurs standards décrivant la séquence des passages d'une pale donnée autour des capteurs consécutifs et la différence de temps est calculée par rapport à la marque de référence la plus proche au moyen des marques de référence sur le tronc de la turbine ; les irrégularités dans la rotation du tronc de la turbine étant éliminées et les valeurs identifiées étant prises comme standard selon les tours actuels et la circonférence de la turbine ; les décalages de temps provoqués par les différentes formes des impulsions générées par la pale étant corrigés et les variations de temps de chaque pale étant convertis en déviations instantanées par rapport à la position moyenne et analysées.

2. Un système destiné à l'analyse et un procédé selon la revendication 1 comprenant une ou plusieurs roues à pales fixées sur un arbre commun d'une turbine à vapeur ou à gaz dans une centrale électrique , où au moins un capteur (2, 3, 4) de la position de la pale qui tourne est disposé près des pales de la turbine dans la partie fixe de la turbine à l'extérieur de la roue à pales autour de sa circonférence, et un capteur supplémentaire (1) pour les marques de référence situées sur l'arbre qui tourne de la turbine et destinées à identifier les pales spécifiques ; lesdites marques étant également destinées à la synchronisation de la pale,
est situé sur l'arbre de la turbine, lesdits capteurs étant connectés par leurs sorties à une unité d'évaluation (5) adaptée pour traiter et stocker des signaux provenant des capteurs (1, 2, 3, 4) concernant la position et l'heure de passage de la pale tournante concernée et l'heure des déviations de la pale et laquelle unité étant également adaptée pour identifier la déflexion des pales, leur contrainte , vibration et le spectre des variations pendant les vibrations,
**caractérisé en ce que** l'unité d'évaluation (5) comprend une première section adaptée pour numériser les données scannées et leur traitement puis stockage sous une forme binaire en tant que fichiers comportant des informations sur l'heure avec une résolution de 10 ns, sur le lieu de l'origine de l'événement temporel et sur la forme des impulsions générées par la pale, et une deuxième section adaptée pour réaliser une analyse statistique du bloc de données continues traitées à partir d'un certain nombre de tours de la turbine, une troisième section adaptée pour transformer les données concernant l'heure générées par le passage des pales autour de chaque capteur (2, 3, 4) en vecteurs standards décrivant la séquence des passages d'une pale donnée autour des capteurs consécutifs, et une quatrième section adaptée pour calculer la différence de temps de ces passages par rapport à la marque de référence la plus proche sur l'arbre de la turbine et pour éliminer les irrégularités dans la rotation de l'arbre de la turbine et adaptée pour prendre comme standard les valeurs identifiées selon les tours actuels et la circonférence de la turbine, et adaptée, en plus, à corriger les décalages de temps provoqués par les formes différentes des impulsions générées par les pales et pour convertir les variations temporelles de chaque pale en déviations instantanées à partir de la position moyenne et pour analyser lesdites déviations.

3. Un système selon la revendication 2, **caractérisé en ce que** le système est disposé sur au moins deux roues à pales ou sections de la turbine afin de lire le degré de torsion de l'arbre, sa contrainte ou la sortie momentanée de la turbine.

4. Un système selon la revendication 2 ou 3, **caractérisé en ce que** les capteurs (1, 2, 3, 4) sont choisis parmi le groupe comprenant une simple bobine ou une bobine différente , une bobine d'induction de scannage ou des bobines fonctionnant dans un champs magnétique ou dans un champs dynamiques actionné par une bobine de secours ou un jeu de bobines de secours, sur le principe d'une magnetorésistance et l'effet Hall, et un capteur laser ou un capteur optique fonctionnant sur le principe de la réflexion d'un rayon à partir d'une pale.

5. Un système selon n'importe laquelle des revendications 2 à 4, **caractérisé en ce que** les pales de la turbine sont magnétisées ou les capteurs (1, 2, 3, 4) sont pourvus d'un champ magnétique de secours créée par un aimant permanent, un électroaimant ou une combinaison des deux.

6. Un système selon n'importe laquelle des revendications 2 à 5, **caractérisé en ce que** l'unité d'évaluation (5) est fixée à un ordinateur (6) ou à un modem (7) ou à un dispositif d'affichage.
